# EUROPEAN PATENT APPLICATION

(11) **EP 3 858 537 A1**
(43) Date of publication of application: **04.08.2021**
(21) Application number: 21154351.7
(22) Date of filing: 29.01.2021
(51) Int. Cl.: B23K 35/00, B23K 35/36, B23K 35/362, B23K 35/02, B23K 35/368

(54) **SYSTEMS AND METHODS FOR MULTI-WIRE SUBMERGED ARC WELDING USING A FLUX-CORED WIRE ELECTRODE**

(30) Priority: 29.01.2020 US 202016776008
(71) Applicant: Lincoln Global, Inc., Santa Fe Springs, CA 90670 (US)
(72) Inventor: STARCK, Stephan, 67269 Grünstadt (DE); SCAPPIN, Michele, 31003 Castelfranco Veneto (IT); JANY, Michel, 76130 Mont Saint Aignan (FR)
(74) Representative: Grosse Schumacher Knauer von Hirschhausen

(57) **Abstract**

Systems (100) for multi-wire submerged arc welding including a flux-cored wire electrode (102) comprising an internal flux, the internal flux comprising about 5 % to about 70 % of a carbonate compound and less than 25% of calcium fluoride (CaF₂) by weight of the flux; an external flux (104) for submerged arc welding, are provided such that, after a submerged arc welding process, the systems (100) provide a weld metal comprising nitrogen in an amount of less than 100 ppm. Methods (200) of performing multi-wire submerged arc welding using a flux-cored electrode (102) and an external flux (104) are also described.

## Description

### Field of the Invention

The present invention relates to a multi-wire submerged arc welding system according to the preamble of claim 1, and to a method for performing submerged arc welding using flux-cored wire electrodes according to the preamble of claim 11.

### BACKGROUND

Welding is a process that has become ubiquitous in various industries for a variety of applications. For example, welding is often used in applications such as shipbuilding, offshore platform, construction, pipe mills, and so forth. Arc welding systems generally apply electrical current to an electrode to form an arc between the electrode and a workpiece, thereby forming a weld deposit on the workpiece. In general, the electrode may be a continuous, welding wire that is advanced the welding system to reach the workpiece. Further, the chemical composition and physical state of the components of the welding wire may significantly affect the quality of the weld.

Certain welding techniques (e.g., Gas Metal Arc Welding (GMAW), Gas-shielded Flux Core Arc Welding (FCAW-G), and Gas Tungsten Arc Welding (GTAW)), typically employ a shielding gas (e.g., argon, carbon dioxide, or oxygen) to provide a particular local atmosphere in and around the welding arc and the weld pool during the welding process, while others (e.g., Flux-Core Arc Welding (FCAW), Submerged Arc Welding (SAW), and Shielded Metal Arc Welding (SMAW)) do not. Additionally, certain types of welding may involve a welding electrode in the form of welding wire. Welding wire may generally provide a supply of filler metal for the weld as well as provide a path for the current during the welding process. Furthermore, certain types of welding wire (e.g., tubular welding wire) may include one or more components (e.g., flux, arc stabilizers, or other additives) that may generally alter the welding process and/or the properties of the resulting weld.

In submerged arc welding (SAW) of steel, there is a need for high efficiency and high speed in welding, in particular when using multiple electrodes, high speed welding and large heat input welding are used. In particular, during SAW, the nitrogen inside the weld metal is kept low by the generation of carbon dioxide during the submerged arc welding process as the carbon dioxide prevents the nitrogen from the atmosphere to come in contact with the weld pool. The carbon dioxide is generated by the decomposition of carbonates which are inside the agglomerated submerged welding flux. However, the presence of carbonates in the agglomerated submerged welding flux results in a limited baking temperature as a baking temperature too elevated will result in the decomposition of the carbonates. As a result of the limited baking temperature, the baking time of the flux has to be longer in order to eliminate all moisture from the binder (minerals and water-based) used to manufacture the agglomerated flux. As such, the baking temperature and time are very important since water not removed during the baking process can generate diffusible hydrogen which can contribute to form cracks in the weld metal.

In this context, there is a need for systems and methods providing high baking temperatures for submerged-arc welding, especially in multi-wire flux-cored welding, that would provide steel plates efficiently welded with a well-defined weld metal composition.

### Summary

Multi-wire submerged arc welding systems using an external flux and a flux-cored wire electrode having an internal flux are provided. Methods for performing submerged arc welding using a flux-cored wire electrode having an internal flux and an external flux to give a weld metal comprising low nitrogen content are also provided.

In one embodiment, a system for multi-wire submerged arc welding comprising: a flux-cored wire electrode comprising an internal flux, the flux comprising about 5 % to about 70 % of a carbonate compound and less than 25% of calcium fluoride (CaF₂) by weight of the flux; an external flux for submerged arc welding, wherein, after a submerged arc welding process, the system provides a weld metal comprising nitrogen in an amount of less than 100 ppm.

In another embodiment, a multi-wire submerged arc welding method comprising providing a flux-cored wire electrode having an internal flux comprising about 5 % to about 70 % of a carbonate compound and less than 25% of calcium fluoride (CaF₂) by weight of the internal flux; providing an external flux for submerged arc welding, and performing submerged arc welding using the flux-cored wire electrode and the external flux to give a weld metal comprising nitrogen in an amount of less than 100 ppm, is provided.

Further embodiments are given in the ensuing description, drawings and claims.

### BRIEF DESCRIPTION OF THE DRAWINGS

Certain embodiments of the present disclosure may take physical form in certain parts and arrangements of parts, a preferred embodiment of which will be described in detail in the specification and illustrated in the accompanying drawings which form a part hereof, and wherein:
FIG. 1 is a schematic side view of an exemplary, non-limiting embodiment of a system for multi-wire submerged arc welding using one composite flux-cored wire electrode and one solid wire electrode.
FIG. 2 is a flow diagram of an exemplary, non-limiting embodiment of a multi-wire submerged arc welding using a composite flux-cored wire electrode and one or more solid wire electrodes.

### Detailed Description

One embodiment of the present disclosure relates to a system for multi-wire submerged arc welding. More particularly, the system includes a flux-cored wire electrode or composite electrode containing carbonates for submerged arc welding. In the multi-wire system of the present disclosure, the flux-cored wire electrode is used in combination with a flux and the flux-cored electrode is used as one or more of the multiple wires of the system and method.

In one embodiment, the flux-cored wire electrode contains a carbonate compound resulting in a weld metal containing a low nitrogen content. The filling flux or internal flux of the flux-cored wire electrode according to the present disclosure may comprise, in suitable combination, high basic slag forming composition, deoxidizing composition, denitrifying composition, desulphurizing composition, high toughening composition, and working property improving composition. The flux-cored wire electrode according to another embodiment may further comprise any material selected according to the compositions of the welding and including fluxes used in combination to obtain the characteristics required in the resulting weld.

In another embodiment, the external flux for submerged arc welding may comprise a fused or agglomerated flux. The external flux of the present systems and methods may contain halides and oxides. In particular, the oxides may comprise aluminum, titanium, silicon, magnesium, manganese, zirconium, calcium, sodium, potassium, strontium, lithium, and barium oxides. Further, the halides may comprise fluorides of calcium, lithium, aluminum, magnesium, potassium, sodium or barium. More particularly, the halides and oxides of the external flux may comprise MnO, SiO₂, CaO, MgO, BaO, Na₂O, K₂O, Al₂O₃, TiO₂, FeO, and CaF₂. Additionally, the external flux may comprise sodium/potassium silicate compounds. The external flux may contain de-oxidizers such as manganese, titanium, silicon singly or in combination. The submerged arc welding external fluxes may produce slag which is generally disposed off away as a waste.

Definitions and methods described herein are provided to better define the present disclosure and to guide those of ordinary skill in the art in the practice of the present disclosure. Unless otherwise noted, terms are to be understood according to conventional usage by those of ordinary skill in the relevant art.

Unless otherwise indicated, all numbers expressing quantities of ingredients, reaction conditions, and so forth used in the present specification and associated claims are to be understood as being modified in all instances by the term "about." Accordingly, unless indicated to the contrary, the numerical parameters set forth in the following specification and attached claims are approximations that may vary depending upon the desired properties sought to be obtained by the aspects of the present disclsoure. At the very least, and not as an attempt to limit the application of the doctrine of equivalents to the scope of the claim, each numerical parameter should at least be construed in light of the number of reported significant digits and by applying ordinary rounding techniques.

In some aspects, the terms "a" and "an" and "the" and similar references used in the context of describing a particular aspect (especially in the context of certain of the following claims) can be construed to cover both the singular and the plural, unless specifically noted otherwise. In some aspects, the term "or" as used herein, including the claims, is used to mean "and/or" unless explicitly indicated to refer to alternatives only or the alternatives are mutually exclusive.

The terms "comprise," "have" and "include" are open-ended linking verbs. Any forms or tenses of one or more of these verbs, such as "comprises," "comprising," "has," "having," "includes" and "including," are also open-ended. For example, any method that "comprises," "has" or "includes" one or more steps is not limited to possessing only those one or more steps and can also cover other unlisted steps. Similarly, any composition or device that "comprises," "has" or "includes" one or more features is not limited to possessing only those one or more features and can cover other unlisted features.

All methods described herein can be performed in any suitable order unless otherwise indicated herein or otherwise clearly contradicted by context. The use of any and all examples, or exemplary language (e.g. "such as") provided with respect to certain aspects herein is intended merely to better illuminate the present disclosure and does not pose a limitation on the scope of the present disclosure otherwise claimed. No language in the specification should be construed as indicating any non-claimed element essential to the practice of the present disclosure.

Groupings of alternative elements or aspects of the present disclosure disclosed herein are not to be construed as limitations. Each group member can be referred to and claimed individually or in any combination with other members of the group or other elements found herein. One or more members of a group can be included in, or deleted from, a group for reasons of convenience or patentability. When any such inclusion or deletion occurs, the specification is herein deemed to contain the group as modified thus fulfilling the written description of all Markush groups used in the appended claims.

Having described the present disclosure in detail, it will be apparent that modifications, variations, and equivalent aspects are possible without departing the scope of the present disclosure defined in the appended claims. Furthermore, it should be appreciated that all examples in the present disclosure are provided as non-limiting examples.

Additional objects, aspects, and advantages of the present disclosure will become better understood with reference to the accompanying description and claims.

### System for multi-wire submerged arc welding

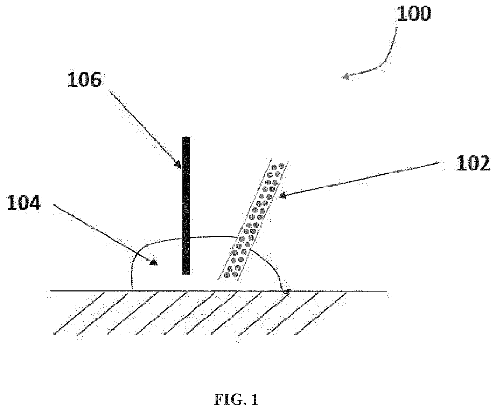

In one embodiment, as shown in FIG. 1, a system **100** for multi-wire submerged arc welding is provided. The system **100** includes a flux-cored wire electrode or composite electrode **102,** an external flux **104,** and a solid wire electrode **106** (additional embodiments may include more than one solid wire electrodes).

In one embodiment, the flux-core wire electrode is for use in submerged arc welding. As such, the compositions of the internal flux of the flux-cored wire electrode may be adjusted according to the desired form of welding method. For example, in a three-electrode method, when a flux-cored wire electrode is be used as one electrode and two solid wire electrodes as the other electrodes, the compositions of the filling flux of the flux cored wire may be used in larger quantity than in the case where more than one electrodes are flux-cored wire electrodes.

The internal flux of the flux-cored wire electrode according to one embodiment may comprise, in any combination, high basic slag forming composition, deoxidizing composition, denitrifying composition, desulphurizing composition, high toughening composition, and working property improving composition.

In the present disclosure, the flux-cored wire electrode may further contain titanium (Ti), boron (B), manganese (Mn), and/or molybdenum (Mo). In particular, the flux-cored wire electrode according to the present disclosure may contain 0% to about 6.0% titanium, 0% to about 0.7% boron, 0% to about 5.0% manganese, and/or 0% to about 6.0% molybdenum. In particular, the flux-cored wire electrode according to the present disclosure may contain 0.5% to about 5.0% titanium, 0.1% to about 0.6% boron, 0.5% to about 4.5% manganese, and/or 0.5% to about 5.5% molybdenum. In particular, the flux-cored wire electrode according to the present disclosure may contain 1.0% to about 4.5% titanium, 1.0% to about 0.5% boron, 1.0% to about 4.0% manganese, and/or 1.0% to about 5.0% molybdenum.

However, in the internal flux of the flux-cored wire electrode of the present disclosure, calcium fluoride (CaF₂) may be in an amount of less than 25% by weight of the internal flux of the of the flux-cored wire electrode, such as less than 20% by weight of the internal flux of the of the flux-cored wire electrode, such as less than 15% by weight of the internal flux of the of the flux-cored wire electrode.

Furthermore, in an embodiment, the internal flux of the flux-cored wire electrode may comprise about 5% to about 70% of a carbonate compound by weight of the internal flux, such as about 10% to about 60% of a carbonate compound by weight of the internal flux, such as about 15% to about 50% of a carbonate compound by weight of the internal flux. Additionally, the carbonate compound may be present in an amount of about 0.8% to about 9% by weight of the flux-cored wire electrode, such as about 0.9% to about 8% by weight of the flux-cored wire electrode, such as about 1% to about 7% by weight of the flux-cored wire electrode.

Additionally, in an embodiment, the internal flux of the flux-cored wire electrode may comprise a carbonate compound selected from the group consisting of calcium carbonate, magnesium carbonate, strontium carbonate, potassium carbonate, sodium carbonate, barium carbonate, manganese carbonate, iron carbonate, cobalt carbonate, cesium carbonate, lithium carbonate, lanthanum carbonate, Ca-Mg carbonate (dolomite) and combinations thereof.

For example, in another embodiment, in a particular embodiment, the internal flux of the flux-cored wire electrode may comprise about 1% to about 4% calcium carbonate, such as about 1.5% to about 3.5% calcium carbonate by weight of the flux-cored wire electrode. In yet another embodiment, the internal flux of the flux-cored wire electrode according to the present disclosure may comprise about 0.8% to about 3.2% magnesium carbonate, such as about 1.0% to about 3.0% magnesium carbonate by weight of the flux-cored wire electrode. In yet another embodiment, the internal flux of the flux-cored wire electrode according to the present disclosure may comprise about 1.4% to about 6% strontium carbonate, such as 1.2% to about 5.5% strontium carbonate about 1% to about 4% calcium carbonate. In yet another embodiment, the internal flux of the flux-cored wire electrode according to the present disclosure may comprise about 2% to about 8% barium carbonate, such as about 2.5% to about 7% barium carbonate by weight of the flux-cored wire electrode.

In another embodiment, the external flux for submerged arc welding may comprise a fused or agglomerated flux. The external flux may contain halides and oxides.

For example, the external flux for submerged arc welding may comprise oxides such as aluminum, titanium, silicon, magnesium, manganese, zirconium, calcium, sodium, potassium, strontium, lithium, and barium oxides. Further, the external flux for submerged arc welding may comprise halides such as fluorides of calcium, lithium, aluminum, magnesium, potassium, sodium or barium.

More particularly, the halides and oxides of the external flux may comprise MnO, SiO₂, CaO, MgO, BaO, Na₂O, K₂O, Al₂O₃, TiO₂, FeO, and CaF₂. Additionally, the external flux may comprise sodium/potassium silicate compounds. The external flux may contain de-oxidizers such as manganese, silicon singly or in combination.

In an embodiment, the system for multi-wire submerged arc welding may also include solid wire electrodes. Such solid wire electrodes may comprise a weld composition containing carbon in an amount from 0.01 wt % to 0.2 wt % of the solid wire electrode, such as from 0.05 wt % to 0.15 wt % of the solid wire electrode, such as from 0.07 wt % to 0.12 wt % of the solid wire electrode. Carbon content variation may result in different structures and different resulting physical and chemical properties.

In the system for multi-wire submerged arc welding of the present disclosure, the current used during welding may be from about 600 A to about 2000 A, such as from about 700 A to about 1700 A, such as from about 800 A to about 1500 A.

In the system for multi-wire submerged arc welding of the present disclosure, the resulting weld metal contains nitrogen in an amount of less than 100 ppm, such as less than 50 ppm, such as less than 10 ppm. In particular, when the system for multi-wire submerged arc welding of the present disclosure includes at least one solid wire electrode, the resulting weld metal contains nitrogen in an amount of less than 50 ppm, such as less than 30 ppm, such as less than 10 ppm.

Further, the system for multi-wire submerged arc welding of the present disclosure may be used in a two-run submerged arc welding process.

### Multi-wire submerged arc welding method

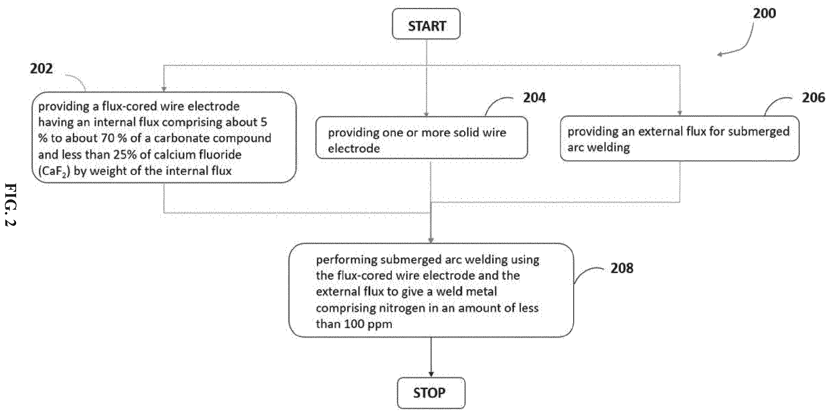

In an embodiment, as shown in FIG. 2, a method 200 of performing submerged arc welding is provided. In one embodiment, the method includes the step **202** of providing a flux-cored wire electrode having an internal flux comprising about 5 % to about 70 % of a carbonate compound and less than 25% of calcium fluoride (CaF₂) by weight of the flux; the step **204** of providing one or more solid wire electrodes; the step **206** of providing an external flux for submerged arc welding, and the step **208** of performing submerged arc welding using the flux-cored wire electrode and the external flux to give a weld metal comprising nitrogen in an amount of less than 100 ppm.

In another embodiment of the present disclosure, is provided a method of performing submerged arc welding comprising providing a flux-cored wire electrode having an internal flux comprising about 5 % to about 70 % of a carbonate compound and less than 25% of calcium fluoride (CaF₂) by weight of the flux; providing an external flux for submerged arc welding, and performing submerged arc welding using the flux-cored wire electrode and the external flux to give a weld metal comprising nitrogen in an amount of less than 100 ppm, such as less than 70 ppm, such as less than 50 ppm.

In another embodiment of the present disclosure, is provided a method of performing submerged arc welding comprising providing a flux-cored wire electrode having an internal flux comprising about 5 % to about 70 % of a carbonate compound and less than 25% of calcium fluoride (CaF₂) by weight of the flux; providing an external flux for submerged arc welding; providing one or more solid wire electrodes comprising unalloyed carbon steel, and performing submerged arc welding using the flux-cored wire electrode, the flux, and the solid wire electrodes, to give a weld metal comprising nitrogen in an amount of less than 50 ppm, such as less than 30 ppm, such as less than 10 ppm.

In yet another embodiment of the present disclosure, is provided a method of performing submerged arc welding comprising providing a flux-cored wire electrode having an internal flux comprising about 5 % to about 70 % of a carbonate compound and less than 25% of calcium fluoride (CaF₂) by weight of the flux; providing an external flux for submerged arc welding; providing one or more solid wire electrodes comprising unalloyed carbon steel comprising carbon in an amount from about 0.01 to about 0.2 % by weight of the solid wire electrode, and performing submerged arc welding using the flux-cored wire electrode, the flux, and the solid wire electrodes, to give a weld metal comprising nitrogen in an amount of less than 50 ppm, such as less than 30 ppm, such as less than 10 ppm.

In another embodiment of the present disclosure, is provided a method of performing submerged arc welding comprising providing a flux-cored wire electrode having an internal flux comprising about 5 % to about 70 % of a carbonate compound and less than 25% of calcium fluoride (CaF₂) by weight of the flux; providing an external flux for submerged arc welding, and performing submerged arc welding in a two-run welding step using the flux-cored wire electrode and the flux to give a weld metal comprising nitrogen in an amount of less than 100 ppm.

In the method of the present disclosure, the submerged arc welding may be performed by applying a welding current to the electrodes, wherein the welding current is from about 600 A to about 2000 A, such as from about 700 A to about 1700 A, such as from about 800 A to about 1500 A.

In another embodiment of the present disclosure, the method of performing submerged arc welding may be such that the carbonate compound is present in an amount of about 0.8% to about 9% by weight of the flux-cored wire electrode, such as about 0.9% to about 8% by weight of the flux-cored wire electrode, such as about 1% to about 7% by weight of the flux-cored wire electrode.

In the method of performing submerged arc welding of the present disclosure, the carbonate compound may be selected from the group consisting of calcium carbonate, magnesium carbonate, strontium carbonate, potassium carbonate, sodium carbonate, barium carbonate, manganese carbonate, iron carbonate, cesium carbonate, lithium carbonate, lanthanum carbonate, and combinations thereof.

In another embodiment, in the method of performing submerged arc welding of the present disclosure, the flux may comprise about 1% to about 4% calcium carbonate, such as about 1.5% to about 3.5% calcium carbonate by weight of the flux-cored wire electrode. In another embodiment, in the method of performing submerged arc welding of the present disclosure, the flux may comprise about 0.8% to about 3.2% magnesium carbonate, such as about 1.0% to about 3.0% magnesium carbonate by weight of the flux-cored wire electrode. In yet another embodiment, in the method of performing submerged arc welding of the present disclosure, the flux may comprise about 1.4% to about 6% strontium carbonate, such as 1.2% to about 5.5% strontium carbonate by weight of the flux-cored wire electrode.. In yet another embodiment, in the method of performing submerged arc welding of the present disclosure, the flux may comprise about 2% to about 8% barium carbonate, such as about 2.5% to about 7% barium carbonate by weight of the flux-cored wire electrode.

In another embodiment, in the method of performing submerged arc welding of the present disclosure, the flux-cored wire electrode further comprises 0% to about 6.0% titanium, 0% to about 0.7% boron, 0% to about 5.0% manganese, and/or 0% to about 6.0% molybdenum.

In the method of performing submerged arc welding of the present disclosure, the flux-cored wire electrode used in performing submerged arc welding may further contain titanium (Ti), boron (B), manganese (Mn), and/or molybdenum (Mo). In particular, the flux-cored wire electrode may contain 0% to about 6.0% titanium, 0% to about 0.7% boron, 0% to about 5.0% manganese, and/or 0% to about 6.0% molybdenum. In particular, the flux-cored wire electrode used in the method of the present disclosure may contain 0.5% to about 5.0% titanium, 0.1% to about 0.6% boron, 0.5% to about 4.5% manganese, and/or 0.5% to about 5.5% molybdenum. In particular, the flux-cored wire electrode used in the method of the present disclosure may contain 1.0% to about 4.5% titanium, 1.0% to about 0.5% boron, 1.0% to about 4.0% manganese, and/or 1.0% to about 5.0% molybdenum.

However, in the method of performing submerged arc welding of the present disclosure, in the internal flux of the flux-cored wire electrode used to perform submerged arc welding, calcium fluoride (CaF₂) may be in an amount of less than 25% by weight of the internal flux of the of the flux-cored wire electrode, such as less than 20% by weight of the internal flux of the of the flux-cored wire electrode, such as less than 15% by weight of the internal flux of the of the flux-cored wire electrode.

Furthermore, in the method of performing submerged arc welding of the present disclosure, the internal flux of the flux-cored wire electrode used to perform submerged arc welding may comprise about 5% to about 70% of a carbonate compound by weight of the internal flux, such as about 10% to about 60% of a carbonate compound by weight of the internal flux, such as about 15% to about 50% of a carbonate compound by weight of the internal flux. Additionally, the carbonate compound may be present in an amount of about 0.8% to about 9% by weight of the flux-cored wire electrode, such as about 0.9% to about 8% by weight of the flux-cored wire electrode, such as about 1% to about 7% by weight of the flux-cored wire electrode.

In another embodiment, in the method of performing submerged arc welding of the present disclosure, the external flux used to perform submerged arc welding is fused flux or agglomerated flux.

Further welding conditions and welding material components may be appropriately controlled according to methods known in the art. For example, welding conditions may include welding heat input of 1-20 kJ/mm, and baking temperatures of agglomerated flux in a range of 500-1000 °C or a melting temperature of a fused flux in a range of 900-1600 °C.

A weld obtained using the above systems and methods and according to the present disclosure exhibits desirable characteristics. Further, the weld structure having very low nitrogen content can be achieved using high baking temperatures for submerged-arc welding, especially in multi-wire flux-cored welding.

One or more illustrative aspects incorporating the embodiments disclosed herein are presented herein. Not all features of a physical implementation are described or shown in this application for the sake of clarity. It is understood that in the development of a physical aspect incorporating the features of the present disclosure, numerous implementation-specific decisions must be made to achieve the developer's goals, such as compliance with system-related, business-related, government-related and other constraints, which vary by implementation and from time to time. While a developer's efforts might be time-consuming, such efforts would be, nevertheless, a routine undertaking for those of ordinary skill in the art and having benefit of this disclosure.

While systems and methods are described herein in terms of "comprising" various components or steps, the methods can also "consist essentially of" or "consist of" the various components and steps.

To facilitate a better understanding of the aspects of the present disclosure, the following examples of preferred or representative features are given. In no way should the following examples be read to limit, or to define, the scope of the invention.

### Examples

The following non-limiting examples are provided to further illustrate the present disclosure. It should be appreciated by those of skill in the art that the techniques disclosed in the examples that follow represent approaches the inventors have found function well in the practice of the present disclosure, and thus can be considered to constitute examples of modes for its practice. However, those of skill in the art should, in light of the present disclosure, appreciate that many changes can be made in the specific aspects that are disclosed and still obtain a like or similar result without departing from the spirit and scope of the present disclosure.

### Example 1

A system will be prepared including a flux-cored wire electrode having a chemical composition including the components shown in Table 1 (quantities are given in wt% of the electrode).

**Table 1**

| CaCO₃ | Ti | B | Mn | Mo |
|---|---|---|---|---|
| 1.0-4.0 | 0-6.0 | 0-0.7 | 0-5.0 | 0-6.0 |

The flux-cored wire electrode contains less than 25% of calcium fluoride (CaF₂) by weight of the internal flux.

The flux-cored wire electrode and a solid wire electrode containing carbon in an amount from 0.01 wt % to 0.2 wt % will be melted and deposited using an external flux on a workpiece.

The deposited molten composition will be allowed to cool and to solidify on the workpiece. The resulting weld metal composition will contain less than 100 ppm of nitrogen.

### Example 2

A system will be prepared including a flux-cored wire electrode having a chemical composition including the components shown in Table 2 (quantities are given in wt% of the electrode).

**Table 2**

| MgCO₃ | Ti | B | Mn | Mo |
|---|---|---|---|---|
| 0.8-3.2 | 0-6.0 | 0-0.7 | 0-5.0 | 0-6.0 |

The flux-cored wire electrode contains less than 25% of calcium fluoride (CaF₂) by weight of the internal flux.

The flux-cored wire electrode and a solid wire electrode containing carbon in an amount from 0.01 wt % to 0.2 wt % will be melted and deposited using an external flux on a workpiece.

The deposited molten composition will be allowed to cool and to solidify on the workpiece. The resulting weld metal composition will contain less than 100 ppm of nitrogen.

### Example 3

A system will be prepared including a flux-cored wire electrode having a chemical composition including the components shown in Table 3 (quantities are given in wt% of the electrode).

**Table 3**

| SrCO₃ | Ti | B | Mn | Mo |
|---|---|---|---|---|
| 1.0-6.0 | 0-6.0 | 0-0.7 | 0-5.0 | 0-6.0 |

The flux-cored wire electrode contains less than 25% of calcium fluoride (CaF₂) by weight of the internal flux.

The flux-cored wire electrode and a solid wire electrode containing carbon in an amount from 0.01 wt % to 0.2 wt % will be melted and deposited using an external flux on a workpiece.

The deposited molten composition will be allowed to cool and to solidify on the workpiece. The resulting weld metal composition will contain less than 100 ppm of nitrogen.

### Example 4

A system will be prepared including a flux-cored wire electrode having a chemical composition including the components shown in Table 4 (quantities are given in wt% of the electrode).

**Table 4**

| BaCO₃ | Ti | B | Mn | Mo |
|---|---|---|---|---|
| 2.0-8.0 | 0-6.0 | 0-0.7 | 0-5.0 | 0-6.0 |

The flux-cored wire electrode contains less than 25% of calcium fluoride (CaF₂) by weight of the internal flux.

The flux-cored wire electrode and a solid wire electrode containing carbon in an amount from 0.01 wt % to 0.2 wt % will be melted and deposited using an external flux on a workpiece.

The deposited molten composition will be allowed to cool and to solidify on the workpiece. The resulting weld metal composition will contain less than 100 ppm of nitrogen.

Therefore, the presently disclosed systems and methods are well adapted to attain the ends and advantages mentioned as well as those that are inherent therein. The particular aspects disclosed above are illustrative only, as the present invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular illustrative aspects disclosed above may be altered, combined, or modified and all such variations are considered within the scope and spirit of the present invention. The terms in the claims have their plain, ordinary meaning unless otherwise explicitly and clearly defined by the patentee.

### REFERENCE NUMERALS

- 100: system
- 102: electrode
- 104: external flux
- 106: solid wire electrode
- 200: method
- 202: step
- 206: step
- 208: step

## Claims

1. A system (100) for multi-wire submerged arc welding, **characterized by**:
a flux-cored wire electrode (102) comprising an internal flux, the internal flux comprising about 5 % to about 70 % of a carbonate compound and less than 25% of calcium fluoride (CaF₂) by weight of the internal flux;
an external flux (104) for submerged arc welding,
wherein, after a submerged arc welding process, the system (100) provides a weld metal comprising nitrogen in an amount of less than 100 ppm.

2. The system of claim 1 further comprising one or more solid wire electrodes (106) comprising unalloyed carbon steel.

3. The system of claim 2, wherein the solid wire electrodes (106) comprise carbon in an amount from about 0.01 wt % to about 0.2 wt % by weight of the solid wire electrode (106).

4. The system of one of the claims 1 to 3, wherein the system (100) is configured to be used in a two-run submerged arc welding process.

5. The system of one of the claims 1 to 4, wherein the system (100) is configured to be operated under a welding current of about 600 A to about 2000 A.

6. The system of one of the claims 1 to 5, wherein the carbonate compound is present in an amount of 0.8% to about 9% by weight of the flux-cored wire electrode (102).

7. The system of one of the claims 1 to 6, wherein the carbonate compound is selected from the group consisting of calcium carbonate, magnesium carbonate, strontium carbonate, potassium carbonate, sodium carbonate, barium carbonate, manganese carbonate, iron carbonate, cobalt carbonate, cesium carbonate, lithium carbonate, lanthanum carbonate, Ca-Mg carbonate (dolomite) and combinations thereof.

8. The system of one of the claims 1 to 7, wherein the internal flux comprises about 1% to about 4% calcium carbonate, about 0.8% to about 3.2% magnesium carbonate, about 1.4% to about 6% strontium carbonate, and/or about 2% to about 8% barium carbonate by weight of the flux-cored wire electrode (102).

9. The system of one of the claims 1 to 8, wherein the flux-cored wire electrode (102) further comprises 0% to about 6.0% titanium, 0% to about 0.7% boron, 0% to about 5.0% manganese, and/or 0% to about 6.0% molybdenum.

10. The system of one of the claims 1 to 9, wherein the external flux (104) is a fused or agglomerated flux.

11. A multi-wire submerged arc welding method, **characterized by**:
providing (202) a flux-cored wire electrode having an internal flux comprising about 5 % to about 70 % of a carbonate compound and less than 25% of calcium fluoride (CaF₂) by weight of the flux;
providing (206) an external flux for submerged arc welding, and
performing (208) submerged arc welding using the flux-cored wire electrode and the external flux to give a weld metal comprising nitrogen in an amount of less than 100 ppm.

12. The method of claim 11 further comprising providing (204) one or more solid wire electrodes (106) comprising unalloyed carbon steel; wherein the step of performing (208) submerged arc welding comprises performing submerged arc welding using the flux-cored wire electrode (102), the external flux (104), and the solid wire electrodes (106), to give a weld metal comprising nitrogen in an amount of less than 50 ppm; wherein preferably: the solid wire electrodes comprise carbon in an amount from about 0.01 to about 0.2 %.

13. The method of claim 11 or 12, wherein the step of performing (208) submerged arc welding comprises a two-run welding step; and/or
wherein the step of performing (208) submerged arc welding comprises applying a welding current to the electrodes (102, 106), wherein the welding current is from about 600 A to about 2000 A.

14. The method of one of the claims 11 to 13, wherein the carbonate compound is present in an amount of about 0.8% to about 9% by weight of the flux-cored wire electrode (102); and/or
wherein the carbonate compound is selected from the group consisting of calcium carbonate, magnesium carbonate, strontium carbonate, potassium carbonate, sodium carbonate, barium carbonate, manganese carbonate, iron carbonate, cesium carbonate, lithium carbonate, lanthanum carbonate, and combinations thereof.

15. The method of one of the claims 11 to 14, wherein the flux comprises about 1% to about 4% calcium carbonate, about 0.8% to about 3.2% magnesium carbonate, about 1.4% to about 6% strontium carbonate, and/or about 2% to about 8% barium carbonate by weight of the flux-cored wire electrode (102); and/or
wherein the flux-cored wire electrode (102) further comprises 0% to about 6.0% titanium, 0% to about 0.7% boron, 0% to about 5.0% manganese, and/or 0% to about 6.0% molybdenum; and/or
wherein the flux (104) is a fused flux or agglomerated flux.
